# EUROPEAN PATENT SPECIFICATION

(11) **EP 3 214 342 B1**
(45) Date of publication and mention of the grant of the patent: **19.09.2018**
(21) Application number: 16205555.2
(22) Date of filing: 20.12.2016
(51) Int. Cl.: F16H 9/14, F04D 25/10, F16H 9/20

(54) **OSCILLATION AMPLITUDE CONTROL COMPONENT, HOME ELECTRICAL EQUIPMENT AND OSCILLATION AMPLITUDE CONTROL METHOD AND DEVICE**
SCHWINGUNGSAMPLITUDENSTEUERUNGSKOMPONENTE, ELEKTRISCHES HAUSHALTSGERÄT UND SCHWINGUNGSAMPLITUDENSTEUERUNGSVERFAHREN UND -VORRICHTUNG
COMPOSANT DE COMMANDE D'AMPLITUDE D'OSCILLATION, ÉQUIPEMENT ÉLECTRIQUE DOMESTIQUE ET PROCÉDÉ ET DISPOSITIF DE COMMANDE D'AMPLITUDE D'OSCILLATION

(30) Priority: 03.03.2016 CN 201610121182
(43) Date of publication of application: 06.09.2017
(73) Proprietor: Beijing Xiaomi Mobile Software Co., Ltd., Beijing 100085 (CN)
(72) Inventor: MA, Ning, Beijing, 100085 (CN); YANG, Yizhen, Beijing, 100085 (CN); WANG, Zhongshuai, Beijing, 100085 (CN)
(74) Representative: Kudlek, Franz Thomas

(56) References cited:
- US-A- 1 879 150
- US-A1- 2007 237 641
- US-A1- 2009 026 850

## Description

### TECHNICAL FIELD

The present disclosure generally relates to the field of home electrical equipment, and more particularly, to an oscillation amplitude control component, according to the preamble of claim 1 and as it is disclosed in US 2009026850A, home electrical equipment and an oscillation amplitude control method and device.

### BACKGROUND

An electric oscillating fan is one of common home electrical equipment in daily lives of people.

In the related art, an oscillating plate gear and an oscillating plate connected with the oscillating plate gear through a connecting rod are arranged in an electric oscillating fan.

When a user presses an oscillating switch, the oscillating switch is joined with the oscillating plate gear to further drive the oscillating plate to rotate through rotation of the oscillating plate gear to finally implement oscillation of the electric oscillating fan.

US 2009/026850 discloses a cylindrical oscillating fan including a base, a cylindrical shell, a blade assembly, a drive motor and an oscillating drive device. The blade assembly and drive motor are assembled into the hollow groove of the cylindrical shell.

The oscillating drive device is assembled into the base to drive the oscillation of the cylindrical shell. A support column is placed into the hollow groove. The top end is fastened to the top of cylindrical shell, and the bottom is fastened to the bottom of cylindrical shell. The support column is also screwed onto upper and lower support portions of the base for two-point positioning. The bottom of support column is linked to the oscillating drive device.

### SUMMARY

Accordingly, the present invention provides an oscillation amplitude control component, home electrical equipment and an oscillation amplitude control method and device.

According to the invention, an oscillation amplitude control component is provided, which includes the features of claim 1.

According to an exemplary embodiment, the two conical plates may be configured to close up towards a middle to increase the surrounding radius of the transmission belt surrounding the V-shaped groove when the pressure applied by the pressure pump increases, and scatter to two sides to decrease the surrounding radius of the transmission belt surrounding the V-shaped groove when the pressure applied by the pressure pump decreases.

According to an exemplary embodiment, two clamping feet may be connected to the pressure pump, and each clamping foot may be pressed against an outer lateral surface of a conical plate in the two conical plates.

According to the invention, a home electrical equipment is provided, which includes: the oscillation amplitude control component according to the invention.

According to the invention, an oscillation amplitude control method is provided, which is adopted for home electrical equipment including an oscillation amplitude control component of the invention, and the method including the features of claim 9.

According to an exemplary embodiment, the step that the pressure generated by the pressure pump is regulated according to the regulation instruction may include that:
the pressure pump is controlled to increase the generated pressure to a first preset numerical value if the regulation instruction indicates the oscillation amplitude to be increased to a first oscillation amplitude; and
the pressure pump is controlled to decrease the generated pressure to a second preset numerical value if the regulation instruction indicates the oscillation amplitude to be decreased to a second oscillation amplitude.

According to an exemplary embodiment, the step that the surrounding radius of the transmission belt surrounding the V-shaped groove is regulated according to the generated pressure may include that:
two conical plates of the V-shaped grooved gear are controlled to close up towards a middle to increase the surrounding radius of the transmission belt surrounding the V-shaped groove when the generated pressure increases; and
the two conical plates are controlled to scatter to two sides to decrease the surrounding radius of the transmission belt surrounding the V-shaped groove when the generated pressure decreases.

According to an exemplary embodiment, the step that the regulation instruction of regulating the oscillation amplitude of the home electrical equipment is received may include that:
an infrared instruction configured to regulate the oscillation amplitude of the home electrical equipment is received sent from remote control equipment.

According to a further embodiment, the home electrical equipment according to the invention is provided with an oscillating switch and an oscillation amplitude control device and the device including:
a receiving module, configured to receive a regulation instruction of regulating an oscillation amplitude of the home electrical equipment when an oscillating switch of the home electrical equipment is in a pressed state;
a generation module, configured to regulate pressure generated by the pressure pump according to the regulation instruction received by the receiving module; and
a regulation module, configured to regulate a surrounding radius of the transmission belt surrounding the V-shaped groove according to the pressure generated by the generation module, and regulate the oscillation amplitude of the home electrical equipment through an oscillating plate for fixing the roller.

According to an exemplary embodiment, the generation module may further be configured to:
control the pressure pump to increase the generated pressure to a first preset numerical value if the regulation instruction indicates the oscillation amplitude to be increased to a first oscillation amplitude; and
control the pressure pump to decrease the generated pressure to a second preset numerical value if the regulation instruction indicates the oscillation amplitude to be decreased to a second oscillation amplitude.

According to an exemplary embodiment, the regulation module may further be configured to:
control two conical plates of the V-shaped grooved gear to close up towards a middle to increase the surrounding radius of the transmission belt surrounding the V-shaped groove when the generated pressure increases; and
control the two conical plates to scatter to two sides to decrease the surrounding radius of the transmission belt surrounding the V-shaped groove when the generated pressure decreases.

According to an exemplary embodiment, the receiving module may further be configured to:
receive an infrared instruction configured to regulate the oscillation amplitude of the home electrical equipment sent from remote control equipment.

According to a fifth aspect, an oscillation amplitude control device is provided, which is configured for home electrical equipment including an oscillation amplitude control component, the oscillation amplitude control component including a V-shaped grooved gear, a pressure pump, a roller with a pre-formed groove and a transmission belt, the transmission belt being configured to surround a V-shaped groove of the V-shaped grooved gear and the pre-formed groove of the roller and the device including:
a processor; and
a memory configured to store instructions executable for the processor,
wherein the processor may be configured to execute a method according to the third aspect.

According to a further embodiment, the invention relates to a computer program including instructions for executing the steps of an oscillation amplitude control method above when said program is executed by a computer.

According to a further embodiment, the invention relates to a recording medium readable by a computer and having recorded thereon a computer program including instructions for executing the steps of an oscillation amplitude control method above.

The technical solutions provided in the embodiment of the present disclosure may achieve the following beneficial effects.

The V-shaped grooved gear and the pressure pump are arranged in the oscillation amplitude control component, the two conical plates in the V-shaped grooved gear close up towards the middle to increase the surrounding radius of the transmission belt surrounding the V-shaped groove of the V-shaped grooved gear when the pressure generated by the pressure pump increases, and the two conical plates in the V-shaped grooved gear scatter to the two sides to decrease the surrounding radius of the transmission belt surrounding the V-shaped groove of the V-shaped grooved gear when the pressure generated by the pressure pump decreases, that is, the surrounding radius of the transmission belt surrounding the V-shaped grooved is changed, so that the problems of incapability in considering each person when multiple persons share the home electrical equipment and resource waste probably existing in case of fewer persons when the oscillation amplitude of the home electrical equipment is fixed in the related art are solved, and the effects of regulating the oscillation amplitude of the home electrical equipment, further facilitating use of a user and avoiding resource waste are achieved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1A is a sectional view of an oscillation amplitude control component, according to an exemplary embodiment.
Fig. 1B is a diagram of increase of a surrounding radius of a transmission belt in case of increase of pressure, according to an exemplary embodiment.
Fig. 1C is a front view of a conical plate with a gear, according to an exemplary embodiment.
Fig. 1D is a diagram of decrease of a surrounding radius of a transmission belt in case of decrease of pressure, according to an exemplary embodiment.
Fig. IE is a diagram of a maximum value and a minimum value of a surrounding radius of a transmission belt, according to an exemplary embodiment.
Fig. IF is a front view of a roller with a pre-formed groove, according to an exemplary embodiment.
Fig. 2 is a flow chart showing an oscillation amplitude control method, according to an exemplary embodiment.
Fig. 3 is a flow chart showing an oscillation amplitude control method, according to another exemplary embodiment.
Fig. 4 is a block diagram of an oscillation amplitude control device, according to an exemplary embodiment.
Fig. 5 is a block diagram of an oscillation amplitude control device, according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

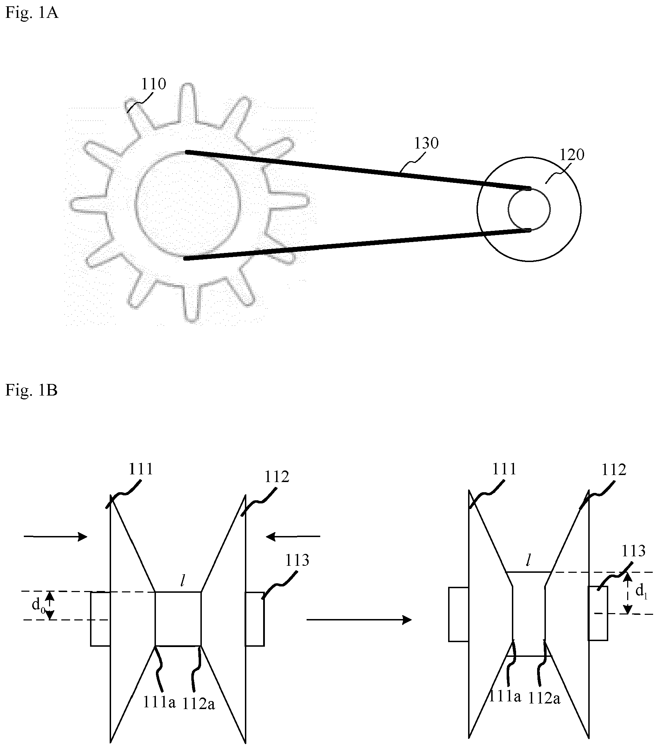

Fig. 1A is a sectional view of an oscillation amplitude control component, according to an exemplary embodiment of the present disclosure. As shown in Fig. 1A, the oscillation amplitude control component includes: a V-shaped grooved gear 110, a pressure pump (not shown in the figure), a roller 120 with a pre-formed groove and a transmission belt 130.

As shown in Fig. 1B, the V-shaped grooved gear 110 includes two conical plates 111 and 112 and a central shaft 113, and the two conical plates 111 and 112 are mounted on the central shaft 113 in a sleeving manner, and may slide leftwards and rightwards along the central shaft 113. As shown in Fig. 1B, lateral surfaces of the two conical plates 111 and 112 and the central shaft 113 enclose a V-shaped groove. The transmission belt 130 surrounds the V-shaped groove and the pre-formed groove of the roller 120. During practical implementation, since the transmission belt 130 surrounds the V-shaped groove, a maximum value of a distance between bottom surfaces 111a and 112a of the two conical plates 111 and 112 is *l* + Δ*l* to avoid leftward and rightward sliding of the transmission belt 130 in a working process, wherein *l* is a width of the transmission belt 130, and a numerical value of Δ*l* is less than a preset threshold value. Moreover, when the two conical plates 111 and 112 slide to close up towards the middle, the transmission belt 130 slides towards an outer side under extrusion of the lateral surfaces of the two conical plates 111 and 112, and the distance between the two bottom surfaces 111a and 112a gradually decreases to 0. The conical plates mentioned in the embodiment refer to parts obtained by removing cones with preset heights from cones.

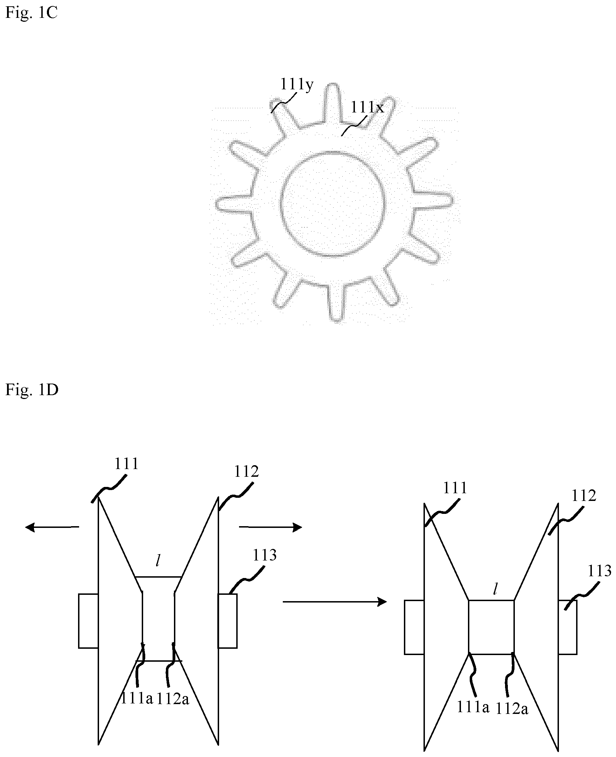

Each of the conical plates 111 and 112 includes a conical disk, and a raised gear is arranged on a circumference of at least one conical disk. If a gear is arranged on a circumference of the conical plate 111, referring to a front view of a conical plate shown in Fig. 1C, the conical plate 111 may include a conical disk 111x and a gear 111y arranged on the circumference, wherein a size, shape and distribution of the gear are matched with a gear in an oscillating switch in home electrical equipment. In such a manner, when the oscillating switch in the home electrical equipment is pressed, the V-shaped grooved gear 110 may be joined with the gear in the oscillating switch through the gear arranged on the circumference of the conical plate, so that the conical plate is driven by a motor to start rotating to drive the transmission belt to start rotating by friction. The home electrical equipment mentioned in the embodiment may be equipment such as an electric oscillating fan or an electric oscillating heater.

The pressure pump is configured to apply pressure to the two conical plates in the V-shaped grooved gear 110. During practical implementation, two clamping feet are connected to the pressure pump, and each clamping foot is pressed against an outer lateral surface of a conical plate in the two conical plates. For example, a clamping foot in the two clamping feet is pressed against the outer lateral surface of the conical plate 111, and the other clamping foot is pressed against the outer lateral surface of the conical plate 112. In addition, the pressure pump is usually a micro pressure pump under limits of a size of the electric oscillating fan.

With reference to Fig. 1B, when the pressure generated by the pressure pump increases, pressure under which the two clamping feet connected with the pressure pump are pressed against the outer lateral surfaces of the conical plates 111 and 112 increases, the two conical plates 111 and 112 close up towards the middle under pressing of the clamping feet, and correspondingly, the transmission belt 130 surrounding a surface of the V-shaped groove slides towards the outer side along the V-shaped lateral surfaces of the two conical plates 111 and 112 under extrusion of the two conical plates 111 and 112, so that a surrounding radius of the transmission belt 130 surrounding the V-shaped groove gradually increases along with closing up of the two conical plates 111 and 112 towards the middle, and for example, the surrounding radius increases from d₀ to di.

On the contrary, referring to Fig. ID, when the pressure generated by the pressure pump decreases, the pressure under which the two clamping feet connected with the pressure pump are pressed against the outer lateral surfaces of the conical plates 111 and 112 decreases, and when the pressure is less than tensile force of the transmission belt on two sides, the two conical plates 111 and 112 may scatter to the two sides, and correspondingly, the transmission belt 130 falls back to the central shaft 113, so that the surrounding radius of the transmission belt 130 surrounding the V-shaped groove gradually decreases along with scattering of the two conical plates 111 and 112 to the two sides.

It is important to note that the conical plates 111 and 112 stop sliding if the tensile force of the transmission belt 130 on the two sides is balanced with the pressure applied by the pressure pump when the two conical plates 111 and 112 close up towards the middle or scatter to the two sides.

In addition, it can be seen from the above analysis that a minimum value of the surrounding radius of the transmission belt 130 surrounding the V-shaped groove is a radius of the central shaft 113, and a maximum value is a radius corresponding to a position of the transmission belt 130 when the two bottom surfaces 111a and 112a of the conical plates 111 and 112 contact.

For example, with reference to Fig. IE, the minimum value of the surrounding radius is d and the maximum value is D. In the figure, *l* is a width of the transmission belt 130.

Optionally, if a value range is preset for the pressure generated by the pressure pump:

if the radius corresponding to the position of the transmission belt 130 when the pressure generated by the pressure pump is a minimum value is greater than the radius of the central shaft 113, the minimum value of the surrounding radius is the radius corresponding to the position of the transmission belt 130 when the pressure is the minimum value; and similarly, if the radius corresponding to the position of the transmission belt 130 when the pressure generated by the pressure pump is a maximum value is less than the radius corresponding to the position of the transmission belt 130 when the two bottom surfaces 111a and 112a of the conical plates 111 and 112 contact, the maximum value of the surrounding radius is the radius corresponding to the position of the transmission belt 130 when the pressure is the maximum value.

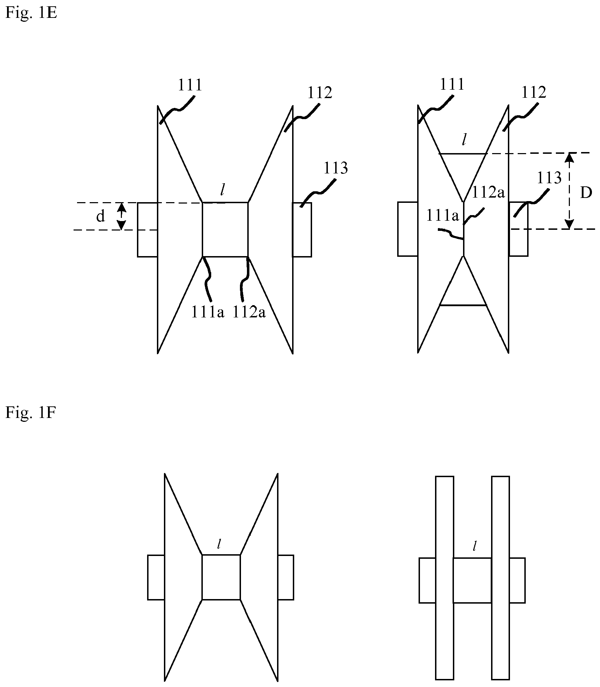

The roller 120 with the pre-formed groove includes a central shaft and two disks mounted on the central shaft in the sleeving manner, wherein the two disks may be conical disks, may also be perfectly circular disks with preset heights, and may further be disks in other shapes such as elliptical disks, of course, which will not be limited in the embodiment. The two disks and the central shaft enclose the pre-formed groove. Wherein, referring to Fig. 1, when the two disks are conical disks, the pre-formed groove may be a V-shaped groove shown in the left figure; while when the two disks are perfectly circular disks with preset heights, the pre-formed groove may also be a rectangular groove shown in the right figure; and of course, the pre-formed groove may also be a groove in another shape during practical implementation, and there are no limits made to the specific shape in the embodiment, wherein *l* is the width of the transmission belt 130.

The roller 120 with the pre-formed groove is fixed in an oscillating plate, and after the roller 120 is driven by the transmission belt 130 to roll, the roller controls an oscillation amplitude of the home electrical equipment through the oscillating plate.

Optionally, if the surrounding radius of the transmission belt 130 surrounding the V-shaped groove of the V-shaped grooved gear 110 is greater, the oscillation amplitude of the home electrical equipment driven by the oscillating plate is correspondingly greater after the roller 120 is driven by the transmission belt 130 to roll; and if the surrounding radius of the transmission belt 130 surrounding the V-shaped groove of the V-shaped grooved gear 110 is less, the oscillation amplitude of the home electrical equipment driven by the oscillating plate is correspondingly less after the roller 120 is driven by the transmission belt 130 to roll.

From the above, according to the oscillation amplitude control component provided in the embodiment, the V-shaped grooved gear and the pressure pump are arranged in the oscillation amplitude control component, the two conical plates in the V-shaped grooved gear close up towards the middle to increase the surrounding radius of the transmission belt surrounding the V-shaped groove of the V-shaped grooved gear when the pressure generated by the pressure pump increases, and the two conical plates in the V-shaped grooved gear scatter to the two sides to decrease the surrounding radius of the transmission belt surrounding the V-shaped groove of the V-shaped grooved gear when the pressure generated by the pressure pump decreases, that is, the surrounding radius of the transmission belt surrounding the V-shaped groove is changed, so that the problems of incapability in considering each person when multiple persons share the home electrical equipment and resource waste probably existing in case of fewer persons when the oscillation amplitude of the home electrical equipment is fixed in the related art are solved, and the effects of regulating the oscillation amplitude of the home electrical equipment, further facilitating use of a user and avoiding resource waste are achieved.

An exemplary embodiment of the present disclosure further provides home electrical equipment, which includes an oscillation amplitude control component shown in Fig. 1A.

From the above, according to the home electrical equipment provided in the embodiment, a V-shaped grooved gear and a pressure pump are arranged in the oscillation amplitude control component of the home electrical equipment, two conical plates in the V-shaped grooved gear close up towards the middle to increase a surrounding radius of a transmission belt surrounding a V-shaped groove of the V-shaped grooved gear when pressure generated by a pressure pump increases, and the two conical plates in the V-shaped grooved gear scatter to two sides to decrease the surrounding radius of the transmission belt surrounding the V-shaped groove of the V-shaped grooved gear when the pressure generated by the pressure pump decreases, that is, the surrounding radius of the transmission belt surrounding the V-shaped groove is changed, so that the problem of inapplicability of home electrical equipment with a fixed oscillation amplitude to some scenarios in the related art is solved, and the effects of regulating the oscillation amplitude of the home electrical equipment and further facilitating use of a user are achieved.

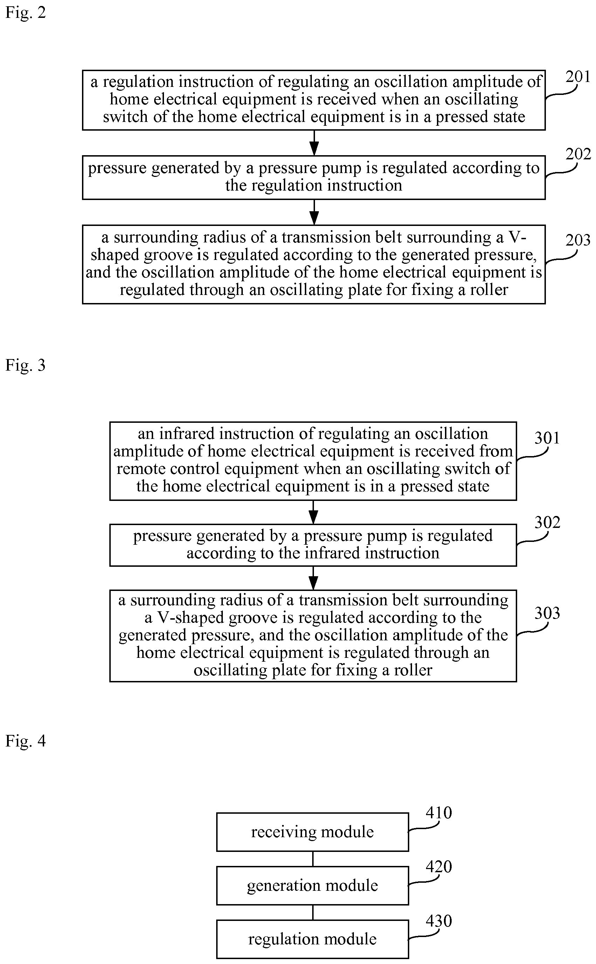

Fig. 2 is a flow chart showing an oscillation amplitude control method, according to an exemplary embodiment of the present disclosure, and the oscillation amplitude control method of the embodiment is adopted for home electrical equipment including an oscillation amplitude control component shown in Fig. 1A. As shown in Fig. 2, the oscillation amplitude control method may include:
In step 201: a regulation instruction of regulating an oscillation amplitude of the home electrical equipment is received when an oscillating switch of the home electrical equipment is in a pressed state;
In step 202: pressure generated by a pressure pump is regulated according to the regulation instruction; and
In step 203: a surrounding radius of a transmission belt surrounding a V-shaped groove is regulated according to the generated pressure, and the oscillation amplitude of the home electrical equipment is regulated through an oscillating plate for fixing a roller.

From the above, according to the oscillation amplitude control method provided in the embodiment, when the regulation instruction of regulating the oscillation amplitude of the home electrical equipment is received, the pressure generated by the pressure pump is regulated according to the regulation instruction, and the surrounding radius of the transmission belt surrounding the V-shaped groove is regulated according to the generated pressure, so that the problems of incapability in considering each person when multiple persons share the home electrical equipment and resource waste probably existing in case of fewer persons when the oscillation amplitude of the home electrical equipment is fixed in the related art are solved, and the effects of regulating the oscillation amplitude of the home electrical equipment, further facilitating use of a user and avoiding resource waste are achieved.

Fig. 3 is a flow chart showing an oscillation amplitude control method, according to an exemplary embodiment of the present disclosure, and the oscillation amplitude control method of the embodiment is adopted for home electrical equipment including an oscillation amplitude control component shown in Fig. 1A. As shown in Fig. 3, the oscillation amplitude control method may include the following steps.

In step 301: an infrared instruction of regulating an oscillation amplitude of the home electrical equipment is received from remote control equipment when an oscillating switch of the home electrical equipment is in a pressed state.

The home electrical equipment may be an electric oscillating fan or an electric oscillating heater, and descriptions are made with the condition that the home electrical equipment is an electric oscillating fan as an example in the embodiment.

When a user is intended to oscillate the electric oscillating fan to work, the user may press an oscillating switch. Then, rotating force of a motor in the electric oscillating fan may be transmitted to a V-shaped grooved gear, the V-shaped grooved gear transmits the rotating force to a roller through a transmission belt, and the electric oscillating fan is finally controlled by an oscillating plate for fixing the roller to start oscillating to work.

When the user is intended to regulate an oscillation amplitude of the electric oscillating fan after the electric oscillating fan starts oscillating to work, the user may send an infrared instruction configured to regulate the oscillation amplitude of the electric oscillating fan to the electric oscillating fan through the remote control equipment, and correspondingly, the electric oscillating fan may receive the infrared instruction sent by the remote control equipment. Optionally, the electric oscillating fan may include an infrared receiving chip, and the infrared instruction sent by the remote control equipment is received through the infrared receiving chip.

For example, if there are three levels of oscillation amplitudes set in the electric oscillating fan and the electric oscillating fan currently works at level 2, when the user is intended to increase the oscillation amplitude of the electric oscillating fan, the user may select an oscillation amplitude increase button in the remote control equipment, and the remote control equipment sends an infrared instruction to the electric oscillating fan after receiving a selection signal.

It is important to note that descriptions are made only with regulation of the oscillation amplitude of the electric oscillating fan through the remote control equipment as an example in the embodiment, and optionally, a physical key configured to regulate the oscillation amplitude of the electric oscillating fan may also be preset in the electric oscillating fan, and the user regulates the oscillation amplitude of the electric oscillating fan in a manner of pressing the physical key. There are no limits made in the embodiment.

In step 302: pressure generated by a pressure pump is regulated according to the infrared instruction.

After the electric oscillating fan receives the infrared instruction, the electric oscillating fan may control the pressure pump to generate the pressure according to the infrared instruction.

Optionally, the step may include that: the pressure pump is controlled to increase the generated pressure to a first preset numerical value if the regulation instruction indicates the oscillation amplitude to be increased to a first oscillation amplitude; and the pressure pump is controlled to decrease the generated pressure to a second preset numerical value if the regulation instruction indicates the oscillation amplitude to be decreased to a second oscillation amplitude.

Optionally, a corresponding relationship between different pressure values and different levels may be stored in the electric oscillating fan, and after the electric oscillating fan receives the infrared instruction, the electric oscillating fan may generate pressure corresponding to a regulated level according to the corresponding relationship, wherein a higher level corresponds to greater pressure.

For example, descriptions will be made with the condition that an infrared instruction of increasing the oscillation amplitude is received when the electric oscillating fan is at level 2 as an example, and after the electric oscillating fan receives the infrared instruction, a pressure value such as 10N corresponding to level 3 is found according to the corresponding relationship, and pressure corresponding to the found pressure value is generated.

In step 303: a surrounding radius of a transmission belt surrounding a V-shaped groove is regulated according to the generated pressure, and the oscillation amplitude of the home electrical equipment is regulated through an oscillating plate for fixing a roller.

Optionally, the step may include that:
two conical plates of the V-shaped grooved gear are controlled to close up towards the middle to increase the surrounding radius of the transmission belt surrounding the V-shaped groove when the generated pressure increases, wherein
the two conical plates of the V-shaped grooved gear may close up towards the middle under extrusion of two clamping feet connected with the pressure pump if the pressure generated by the pressure pump increases, and the two conical plates may stop closing up when tensile force of the transmission belt is balanced with the pressure applied by the pressure pump through the clamping feet, wherein the transmission belt may slide towards an outer side along a V-shaped lateral surface of the V-shaped grooved gear under extrusion of the conical plates when the two conical plates close up towards the middle, and then the surrounding radius of the transmission belt surrounding the V-shaped groove of the V-shaped grooved gear increases; and
the two conical plates are controlled to scatter to two sides to decrease the surrounding radius of the transmission belt surrounding the V-shaped groove when the generated pressure decreases, wherein
the two conical plates of the V-shaped grooved gear may scatter to two sides under the action of the tensile force of the transmission belt if the pressure generated by the pressure pump decreases, the transmission belt may correspondingly keep falling to a central shaft of the V-shaped grooved gear, and the surrounding radius of the transmission belt surrounding the V-shaped groove of the V-shaped grooved gear decreases, wherein the two conical plates may stop scattering to the two sides when the tensile force of the transmission belt is balanced with the pressure applied by the pressure pump in a process of scattering of the two conical plates to the two sides.

When the transmission belt drives the roller to roll after the surrounding radius of the transmission belt surrounding the V-shaped groove of the V-shaped grooved gear changes, the oscillation amplitude of the electric oscillating fan driven by the oscillating plate for fixing the roller may correspondingly change. For example, the oscillation amplitude of the electric oscillating fan may increase when the surrounding radius of the transmission belt surrounding the V-shaped grooved gear increases, and the oscillation amplitude of the electric oscillating fan may correspondingly decrease when the surrounding radius of the transmission belt surrounding the V-shaped grooved gear decreases, which will not be elaborated in the embodiment.

From the above, according to the oscillation amplitude control method provided in the embodiment, when the regulation instruction of regulating the oscillation amplitude of the home electrical equipment is received, the pressure generated by the pressure pump is regulated according to the regulation instruction, and the surrounding radius of the transmission belt surrounding the V-shaped groove is regulated according to the generated pressure, so that the problems of incapability in considering each person when multiple persons share the home electrical equipment and resource waste probably existing in case of fewer persons when the oscillation amplitude of the home electrical equipment is fixed in the related art are solved, and the effects of regulating the oscillation amplitude of the home electrical equipment, further facilitating use of a user and avoiding resource waste are achieved.

A device embodiment of the present disclosure is described below, and may be configured to execute the method embodiment of the present disclosure. Details which are not disclosed in the device embodiment of the present disclosure refer to the method embodiment of the present disclosure.

Fig. 4 is a block diagram of an oscillation amplitude control device, according to an exemplary embodiment. The device may be applied to home electrical equipment including an oscillation amplitude control component shown in Fig. 1A. The device may include: a receiving module 410, a generation module 420 and a regulation module 430.

The receiving module 410 is configured to receive a regulation instruction of regulating an oscillation amplitude of the home electrical equipment when an oscillating switch of the home electrical equipment is in a pressed state;
the generation module 420 is configured to regulate pressure generated by a pressure pump according to the regulation instruction received by the receiving module 410; and
the regulation module 430 is configured to regulate a surrounding radius of a transmission belt surrounding a V-shaped groove according to the pressure generated by the generation module 420, and regulate the oscillation amplitude of the home electrical equipment through an oscillating plate for fixing a roller.

From the above, according to the oscillation amplitude control component provided in the embodiment, when the regulation instruction of regulating the oscillation amplitude of the home electrical equipment is received, the pressure generated by the pressure pump is regulated according to the regulation instruction, and the surrounding radius of the transmission belt surrounding the V-shaped groove is regulated according to the generated pressure, so that the problem of inapplicability of home electrical equipment with a fixed oscillation amplitude to some scenarios in the related art is solved, and the effects of regulating the oscillation amplitude of the home electrical equipment and further facilitating use of a user are achieved.

In the embodiment, the generation module 420 is further configured to:
control the pressure pump to increase the generated pressure to a first preset numerical value if the regulation instruction indicates the oscillation amplitude to be increased to a first oscillation amplitude; and
control the pressure pump to decrease the generated pressure to a second preset numerical value if the regulation instruction indicates the oscillation amplitude to be decreased to a second oscillation amplitude.

Optionally, the regulation module 430 is further configured to:
control two conical plates of the V-shaped grooved gear to close up towards the middle to increase the surrounding radius of the transmission belt surrounding the V-shaped groove when the generated pressure increases; and
control the two conical plates to scatter to two sides to decrease the surrounding radius of the transmission belt surrounding the V-shaped groove when the generated pressure decreases.

Optionally, the receiving module 410 is further configured to:
receive an infrared instruction configured to regulate the oscillation amplitude of the home electrical equipment from remote control equipment.

It is important to note that the device provided in the embodiment is described only with division of each of the abovementioned functional modules as an example when controlling the oscillation amplitude, and during practical application, the abovementioned functions may be allocated to different functional modules for realization according to a practical requirement, that is, a content structure of the device is divided into different functional modules to realize all or part of the abovementioned functions.

With respect to the devices in the above embodiments, the specific manners for performing operations of individual modules therein have been described in detail in the method embodiments, which will not be elaborated herein.

An exemplary embodiment of the present disclosure further provides an oscillation amplitude control device, which may implement an oscillation amplitude control method provided in the present disclosure. The oscillation amplitude control device is configured for home electrical equipment including an oscillation amplitude control component, the oscillation amplitude control component including a V-shaped grooved gear, a pressure pump, a V-shaped grooved roller and a transmission belt, the transmission belt being configured to surround a V-shaped groove of the V-shaped grooved gear and a second V-shaped groove of the V-shaped grooved roller, and the oscillation amplitude control device including: a processor, and a memory configured to store instructions executable for the processor,
wherein the processor is configured to:
receive a regulation instruction of regulating an oscillation amplitude of the home electrical equipment when an oscillating switch of the home electrical equipment is in a pressed state;
regulate pressure generated by the pressure pump according to the regulation instruction; and
regulate a surrounding radius of the transmission belt surrounding the V-shaped groove according to the generated pressure, and regulate the oscillation amplitude of the home electrical equipment through the transmission belt and an oscillating plate for fixing the V-shaped grooved roller.

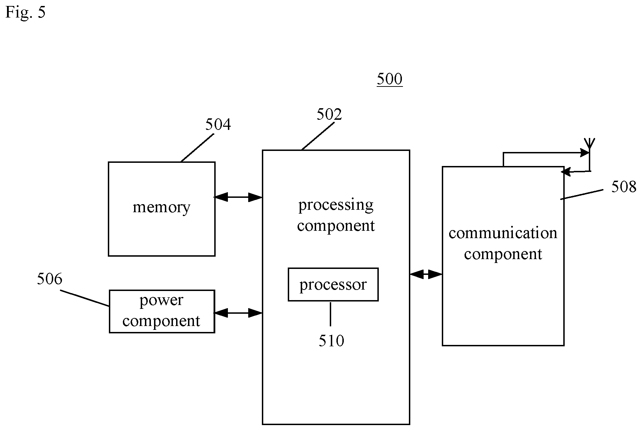

Fig. 5 is a block diagram of an oscillation amplitude control device, according to an exemplary embodiment. For example, the oscillation amplitude control device 500 may be home electrical equipment such as an electric oscillating fan or an electric oscillating heater.

Referring to Fig. 5, the device 500 may include one or more of the following components: a processing component 502, a memory 504, a power component 506 and a communication component 508.

The processing component 502 typically controls overall operations of the device 500, such as the operations associated with display, data communications, camera operations, and recording operations. The processing component 502 may include one or more processors 510 to execute instructions to perform all or part of the steps in the abovementioned method. Moreover, the processing component 502 may include one or more modules which facilitate interaction between the processing component 502 and the other components.

The memory 504 is configured to store various types of data to support the operation of the device 500. Examples of such data include instructions for any application programs or methods operated on the device 500, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or disk.

The power component 506 provides power for various components of the device 500. The power component 506 may include a power management system, one or more power supplies, and other components associated with the generation, management and distribution of power for the device 500.

The communication component 508 is configured to facilitate wired or wireless communication between the device 500 and another device. In an exemplary embodiment, the communication component 508 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 504 including an instruction, and the instruction may be executed by the processor 510 of the device 500 to implement the abovementioned method. For example, the non-transitory computer-readable storage medium may be a ROM, a Compact Disc Read-Only Memory (CD-ROM), a magnetic tape, a floppy disc, an optical data storage device and the like.

According to a non-transitory computer-readable storage medium, when an instruction in the storage medium is executed by the processor of the device 500, the device 500 may execute the abovementioned oscillation amplitude control method.

### INDUSTRIAL APPLICABILITY

In an embodiment of the present application, a V-shaped grooved gear and a pressure pump are arranged in an oscillation amplitude control component, two conical plates in the V-shaped grooved gear close up towards the middle to increase a surrounding radius of a transmission belt surrounding a V-shaped groove of the V-shaped grooved gear when pressure generated by the pressure pump increases, and the two conical plates in the V-shaped grooved gear scatter to two sides to decrease the surrounding radius of the transmission belt surrounding the V-shaped groove of the V-shaped grooved gear when the pressure generated by the pressure pump decreases, that is, the surrounding radius of the transmission belt surrounding the V-shaped groove is changed, so that the problems of incapability in considering each person when multiple persons share the home electrical equipment and resource waste probably existing in case of fewer persons when the oscillation amplitude of the home electrical equipment is fixed in the related art are solved, and the effects of regulating the oscillation amplitude of the home electrical equipment, further facilitating use of a user and avoiding resource waste are achieved.

## Claims

1. An oscillation amplitude control component for a home electrical equipment, wherein the component comprises: a V-shaped grooved gear (110), a pressure pump, a roller (120) with a pre-formed groove and a transmission belt (130), wherein
the V-shaped grooved gear (110) comprises a central shaft and two conical plates mounted on the central shaft in a sleeving manner; lateral surfaces of the two conical plates and the central shaft enclose a V-shaped groove; **characterized in that** a gear is arranged on a circumference of at least one conical plate of the two conical plates, and the gear is joined with an oscillating switch when the oscillating switch in home electrical equipment is pressed;
the transmission belt (130) is configured to surround the V-shaped groove of the V-shaped grooved gear (110) and the pre-formed groove of the roller (120); the two conical plates regulate a surrounding radius of the transmission belt (130) surrounding the V-shaped groove under control of pressure generated by the pressure pump; and
the roller (120) is fixed to an oscillating plate, and controls an oscillation amplitude of the home electrical equipment through the oscillating plate.

2. The oscillation amplitude control component according to claim 1, wherein
the two conical plates are configured to close up towards a middle to increase the surrounding radius of the transmission belt (130) surrounding the V-shaped groove when the pressure applied by the pressure pump increases, and scatter to two sides to decrease the surrounding radius of the transmission belt (130) surrounding the V-shaped groove when the pressure applied by the pressure pump decreases.

3. The oscillation amplitude control component according to claim 1 or claim 2, wherein two clamping feet are connected to the pressure pump, and each clamping foot is pressed against an outer lateral surface of a conical plate in the two conical plates.

4. Home electrical equipment, **characterized in that** the home electrical equipment comprises the oscillation amplitude control component according to any one of claims 1 to 3.

5. Home electrical equipment according to claim 4, comprising an oscillating switch and an oscillation amplitude control device, wherein the device comprises:
a receiving module (410), configured to receive a regulation instruction of regulating an oscillation amplitude of the home electrical equipment when the oscillating switch of the home electrical equipment is in a pressed state;
a generation module (420), configured to regulate pressure generated by the pressure pump according to the regulation instruction received by the receiving module (410); and
a regulation module (430), configured to regulate a surrounding radius of the transmission belt surrounding the V-shaped groove according to the pressure generated by the generation module (420), and regulate the oscillation amplitude of the home electrical equipment through an oscillating plate for fixing the roller.

6. The home electrical equipment according to claim 5, wherein the generation module (420) is further configured to:
control the pressure pump to increase the generated pressure to a first preset numerical value if the regulation instruction indicates the oscillation amplitude to be increased to a first oscillation amplitude; and
control the pressure pump to decrease the generated pressure to a second preset numerical value if the regulation instruction indicates the oscillation amplitude to be decreased to a second oscillation amplitude.

7. The home electrical equipment according to claim 5 or claim 6, wherein the regulation module (430) is further configured to:
control two conical plates of the V-shaped grooved gear to close up towards a middle to increase the surrounding radius of the transmission belt surrounding the V-shaped groove when the generated pressure increases; and
control the two conical plates to scatter to two sides to decrease the surrounding radius of the transmission belt surrounding the V-shaped groove when the generated pressure decreases.

8. The home electrical equipment according to any one of claims 5 to 7, wherein the receiving module (410) is further configured to:
receive an infrared instruction configured to regulate the oscillation amplitude of the home electrical equipment sent from remote control equipment.

9. An oscillation amplitude control method, adopted for home electrical equipment comprising an oscillation amplitude control component according to claim 1, **characterized in that** the method comprises:
receiving a regulation instruction of regulating an oscillation amplitude of the home electrical equipment when an oscillating switch of the home electrical equipment is in a pressed state (201);
regulating pressure generated by the pressure pump according to the regulation instruction (202); and
regulating a surrounding radius of the transmission belt surrounding the V-shaped groove according to the generated pressure, and the oscillation amplitude of the home electrical equipment is regulated through an oscillating plate for fixing the roller (203).

10. The method according to claim 9, wherein the step of regulating the pressure generated by the pressure pump according to the regulation instruction comprises:
controlling the pressure pump to increase the generated pressure to a first preset numerical value if the regulation instruction indicates the oscillation amplitude to be increased to a first oscillation amplitude; and
controlling the pressure pump to decrease the generated pressure to a second preset numerical value if the regulation instruction indicates the oscillation amplitude to be decreased to a second oscillation amplitude.

11. The method according to claim 9 or claim 10, wherein the step of regulating the surrounding radius of the transmission belt surrounding the V-shaped groove according to the generated pressure comprises:
controlling two conical plates of the V-shaped grooved gear to close up towards a middle to increase the surrounding radius of the transmission belt surrounding the V-shaped groove when the generated pressure increases; and
controlling the two conical plates to scatter to two sides to decrease the surrounding radius of the transmission belt surrounding the V-shaped groove when the generated pressure decreases.

12. The method according to claim 9, wherein the step of receiving the regulation instruction of regulating the oscillation amplitude of the home electrical equipment comprises:
receiving an infrared instruction configured to regulate the oscillation amplitude of the home electrical equipment sent from remote control equipment.

13. An oscillation amplitude control device, configured for home electrical equipment comprising an oscillation amplitude control component, the oscillation amplitude control component comprising a V-shaped grooved gear, a pressure pump, a roller with a pre-formed groove and a transmission belt, the transmission belt being configured to surround a V-shaped groove of the V-shaped grooved gear and the pre-formed groove of the roller, the oscillation amplitude control component especially being provided according to any one of claims 1 to 3 **characterized in that** the device comprises:
a processor; and
a memory configured to store instructions executable for the processor,
wherein the processor is configured to execute a method according to claim 9.

14. A computer program including instructions for executing the steps of an oscillation amplitude control method according to any one of claims 9 to 12 when said program is executed by a computer.

15. A recording medium readable by a computer and having recorded thereon a computer program including instructions for executing the steps of an oscillation amplitude control method according to any one of claims 9 to 12.

## Patentansprüche

1. Schwingungsamplitudensteuerkomponente für ein elektrisches Haushaltsgerät, wobei die Komponente aufweist: ein V-förmig gerilltes bzw. genutetes Zahnrad (110), eine Druckpumpe, eine Rolle bzw. Walze (120) mit einer vorgeformten Rille bzw. Nut und einem Treibriemen (130), wobei das V-förmig gerillte bzw. genutete Zahnrad (110) aus einer zentralen Welle bzw. Mittelwelle und zwei konischen Platten besteht, die auf die Mittelwelle hülsenförmig montiert sind; Seitenflächen der zwei konischen Platten und der Mittelwelle umschließen eine V-förmige Rille bzw. Nut; **dadurch gekennzeichnet, dass** ein Zahnrad auf einem Umfang bzw. Kreisumfang von mindestens einer konischen Platte der zwei konischen Platten angeordnet ist, und das Zahnrad mit einem oszillierenden Schalter verbunden ist bzw. wird, wenn der oszillierende Schalter in dem elektrischen Haushaltsgerät gedrückt wird; der Treibriemen (130) dazu konfiguriert ist, die V-förmige Rille des V-förmig gerillten Zahnrads (110) und die vorgeformte Rille der Rolle bzw. Walze (120) zu umschließen bzw. zu umfassen; die zwei konischen Platten einen Umgebungsradius des Treibriemens (130), der die V-förmige Rille umschließt, mittels Steuerung des Drucks, der von der Druckpumpe erzeugt wird, zu regulieren bzw. steuern; und
die Rolle bzw. Walze (120) an einer oszillierenden Platte befestigt ist, und eine Schwingungsamplitude des elektrischen Haushaltsgerätes mittels der oszillierenden Platte steuert.

2. Schwingungsamplitudensteuerkomponente gemäß Anspruch 1, wobei die zwei konischen Platten derart konfiguriert sind, dass sie sich zu einer Mitte hin schließen bzw. aufeinander zu bewegen, um den Umgebungsradius des Treibriemens (130), der die V-förmige Rille umschließt, zu vergrößern, wenn der Druck, der von der Druckpumpe ausgeübt wird, zunimmt bzw. vergrößert wird, und sich auf zwei Seiten zu verteilen bzw. zu streuen, um den Umgebungsradius des Treibriemens (130), der die V-förmige Rille umschließt, zu verringern, wenn der Druck, der von der Druckpumpe ausgeübt wird, abnimmt bzw. verringert wird.

3. Schwingungsamplitudensteuerkomponente gemäß Anspruch 1 oder Anspruch 2, wobei zwei Klemmfüße mit der Druckpumpe verbunden sind, und jeder Klemmfuß gegen eine äußere Seitenfläche einer konischen Platte der zwei konischen Platten gedrückt wird.

4. Elektrisches Haushaltsgerät, **dadurch gekennzeichnet, dass** das elektrische Haushaltsgerät die Schwingungsamplitudensteuerkomponente gemäß einem der Ansprüche 1 bis 3 aufweist.

5. Elektrisches Haushaltsgerät gemäß Anspruch 4, das einen oszillierenden Schalter und eine Schwingungsamplitudensteuervorrichtung aufweist, wobei die Vorrichtung aufweist:
ein Empfangsmodul (410), das dazu konfiguriert ist, eine Steuerinstruktion bzw. -anleitung zur Steuerung einer Schwingungsamplitude des elektrischen Haushaltsgerätes zu empfangen, wenn der oszillierende Schalter des elektrischen Haushaltsgerätes in einem gedrückten Zustand ist;
ein Erzeugungsmodul (420), das dazu konfiguriert ist, den Druck, der von der Druckpumpe gemäß der Steuerinstruktion bzw. -anleitung erzeugt und von dem Empfangsmodul (410) empfangen wird, zu steuern;
und
ein Regulations- bzw. Steuermodul (430), das dazu konfiguriert ist, einen Umgebungsradius des Treibriemens zu steuern, der die V-förmige Rille gemäß dem Druck, der von dem Erzeugungsmodul (420) erzeugt wird, umschließt und die Schwingungsamplitude des elektrischen Haushaltsgerätes mittels einer oszillierenden Platte zur Befestigung der Rolle bzw. Walze zu steuern.

6. Elektrisches Haushaltsgerät gemäß Anspruch 5, wobei das Erzeugungsmodul (420) ferner dazu konfiguriert ist:
die Druckpumpe zu steuern, um den erzeugten Druck auf einen ersten voreingestellten nummerischen Wert bzw. Zahlenwert zu erhöhen, wenn die Steueranleitung die Schwingungsamplitude angibt, die auf eine erste Schwingungsamplitude erhöht werden soll; und
die Druckpumpe zu steuern, um den erzeugten Druck auf einen zweiten voreingestellten Zahlenwert zu verringern, wenn die Steueranleitung die Schwingungsamplitude angibt, die auf eine zweite Schwingungsamplitude gesenkt werden soll.

7. Elektrisches Haushaltsgerät gemäß Anspruch 5 oder Anspruch 6, wobei das Steuermodul (430) ferner dazu konfiguriert ist:
zwei konische Platten des V-förmig gerillten Zahnrads zu steuern, dass sie zu einer Mitte hin schließen bzw. aufeinander zu bewegt werden, um den Umgebungsradius des Treibriemens, der die V-förmige Rille umschließt zu vergrößern, wenn der erzeugte Druck zunimmt; und
die zwei konischen Platten zu steuern, dass sie auf zwei Seiten verteilt bzw. auseinander bewegt werden, um den Umgebungsradius des Treibriemens, der die V-förmige Rille umschließt, zu verringern, wenn der erzeugte Druck abnimmt.

8. Elektrisches Haushaltsgerät gemäß einem der Ansprüche 5 bis 7, wobei das Empfangsmodul (410) ferner dazu konfiguriert ist:
eine Infrarotanleitung zu empfangen, die derart konfiguriert ist, dass sie die Schwingungsamplitude des elektrischen Haushaltsgerätes steuert, die von einem Fernsteuerungsgerät bzw. einer Fernbedienung gesendet wurde.

9. Schwingungsamplitudensteuerverfahren, das für ein elektrisches Haushaltsgerät angewendet wird, das eine Schwingungsamplitudensteuerkomponente gemäß Anspruch 1 aufweist, **dadurch gekennzeichnet, dass** das Verfahren umfasst:
Empfangen einer Steueranleitung zur Steuerung einer Schwingungsamplitude des elektrischen Haushaltsgerätes, wenn ein oszillierender Schalter des elektrischen Haushaltsgerätes in einem gedrückten Zustand (201) ist;
Steuerung des Drucks, der von der Druckpumpe gemäß der Steueranleitung (202) erzeugt wird; und
Steuerung eines Umgebungsradius des Treibriemens, der die V-förmige Rille gemäß des erzeugten Drucks umschließt, und die Schwingungsamplitude des elektrischen Haushaltsgerätes wird mittels einer oszillierenden Platte zur Befestigung der Rolle bzw. Walze (203) gesteuert.

10. Verfahren gemäß Anspruch 9, wobei der Schritt der Steuerung des Drucks, der von der Druckpumpe gemäß der Steueranleitung erzeugt wird, umfasst:
Steuerung der Druckpumpe, um den erzeugten Druck auf einen ersten voreingestellten Zahlenwert zu erhöhen, wenn die Steueranleitung die Schwingungsamplitude angibt, die auf eine erste Schwingungsamplitude erhöht werden soll; und
Steuerung der Druckpumpe, um den erzeugten Druck auf einen zweiten voreingestellten Zahlenwert zu verringern, wenn die Steueranleitung die Schwingungsamplitude angibt, die auf eine zweite Schwingungsamplitude gesenkt werden soll.

11. Verfahren gemäß Anspruch 9 oder Anspruch 10, wobei der Schritt der Steuerung des Umgebungsradius des Treibriemens, der die V-förmige Rille gemäß des erzeugten Drucks umschließt, umfasst:
die Steuerung von zwei konischen Platten des V-förmig gerillten Zahnrads, so dass sie zu einer Mitte hin schließen, um den Umgebungsradius des Treibriemens, der die V-förmige Rille umschließt zu vergrößern, wenn der erzeugte Druck zunimmt; und
die Steuerung der zwei konischen Platten, so dass sie auf zwei Seiten verteilt bzw. auseinander bewegt werden, um den Umgebungsradius des Treibriemens, der die V-förmige Rille umschließt, zu verringern, wenn der erzeugte Druck abnimmt.

12. Verfahren gemäß Anspruch 9, wobei der Schritt des Empfangens der Steueranleitung zur Steuerung der Schwingungsamplitude des elektrischen Haushaltsgerätes umfasst:
eine Infrarotanleitung, die dazu konfiguriert ist, die Schwingungsamplitude des elektrischen Haushaltsgerätes zu steuern, die von einem Fernsteuerungsgerät bzw. einer Fernbedienung gesendet wurde, zu empfangen.

13. Schwingungsamplitudensteuervorrichtung, die für ein elektrisches Haushaltsgerät konfiguriert ist und eine Schwingungsamplitudensteuerkomponente aufweist, wobei die Schwingungsamplitudensteuerkomponente ein V-förmig gerilltes Zahnrad, eine Druckpumpe, eine Rolle bzw. Walze mit einer vorgeformten Rille und einen Treibriemen aufweist, wobei der Treibriemen dazu konfiguriert ist, eine V-förmige Rille des V-förmig gerillten Zahnrads und die vorgeformte Rille der Rolle bzw. Walze zu umschließen, wobei die Schwingungsamplitudensteuerkomponente insbesondere gemäß einem der Ansprüche 1 bis 3 ausgebildet ist, **dadurch gekennzeichnet, dass** die Vorrichtung aufweist:
einen Prozessor; und
einen Speicher, der dazu konfiguriert ist, Anleitungen, die von dem Prozessor ausgeführt werden können, zu speichern,
wobei der Prozessor dazu konfiguriert ist, ein Verfahren gemäß Anspruch 9 auszuführen.

14. Computerprogramm, das Anleitungen zur Ausführung der Schritte eines Schwingungsamplitudensteuerverfahrens gemäß einem der Ansprüche 9 bis 12 enthält, wenn das Programm von einem Computer ausgeführt wird.

15. Aufzeichnungsmedium, das von einem Computer lesbar ist und auf dem ein Computerprogramm aufgezeichnet bzw. gespeichert ist, das Anleitungen zur Ausführung der Schritte eines Schwingungsamplitudensteuerverfahrens gemäß einem der Ansprüche 9 bis 12 aufweist.

## Revendications

1. Composant de commande d'amplitude d'oscillation pour un équipement électrique domestique, dans lequel le composant comporte : un engrenage à gorge en forme de V (110), une pompe de pression, un galet (120) avec une gorge préformée et une courroie de transmission (130), dans lequel l'engrenage à gorge en forme de V (110) comporte un arbre central et deux plaques coniques montées sur l'arbre central d'une manière manchonnée ; des surfaces latérales des deux plaques coniques et de l'arbre central enferment une gorge en forme de V ; **caractérisé en ce qu'**un engrenage est agencé sur une circonférence d'au moins une plaque conique parmi les deux plaques coniques, et l'engrenage est assemblé avec un commutateur oscillant lorsque le commutateur oscillant dans l'équipement électrique domestique est pressé ;
la courroie de transmission (130) est configurée pour entourer la gorge en forme de V de l'engrenage à gorge en forme de V (110) et la gorge préformée du galet (120) ; les deux plaques coniques régulent un rayon périphérique de la courroie de transmission (130) entourant la gorge en forme de V sous une commande de pression générée par la pompe de pression ; et
le galet (120) est fixé à une plaque oscillante, et commande une amplitude d'oscillation de l'équipement électrique domestique via la plaque oscillante.

2. Composant de commande d'amplitude d'oscillation selon la revendication 1, dans lequel les deux plaques coniques sont configurées pour se resserrer vers un centre pour augmenter le rayon périphérique de la courroie de transmission (130) entourant la gorge en forme de V lorsque la pression appliquée par la pompe de pression augmente, et pour s'écarter vers deux côtés pour réduire le rayon périphérique de la courroie de transmission (130) entourant la gorge en forme de V lorsque la pression appliquée par la pompe de pression diminue.

3. Composant de commande d'amplitude d'oscillation selon la revendication 1 ou la revendication 2, dans lequel deux pieds de serrage sont reliés à la pompe de pression, et chaque pied de serrage est pressé contre une surface latérale extérieure d'une plaque conique dans les deux plaques coniques.

4. Equipement électrique domestique, **caractérisé en ce que** l'équipement électrique domestique comporte le composant de commande d'amplitude d'oscillation selon l'une quelconque des revendications 1 à 3.

5. Equipement électrique domestique selon la revendication 4, comportant un commutateur oscillant et un dispositif de commande d'amplitude d'oscillation, dans lequel le dispositif comporte :
un module de réception (410), configuré pour recevoir une instruction de régulation consistant à réguler une amplitude d'oscillation de l'équipement électrique domestique lorsque le commutateur oscillant de l'équipement électrique domestique est dans un état pressé ;
un module de génération (420), configuré pour réguler une pression générée par la pompe de pression en fonction de l'instruction de régulation reçue par le module de réception (410) ; et
un module de régulation (430), configuré pour réguler un rayon périphérique de la courroie de transmission entourant la gorge en forme de V en fonction de la pression générée par le module de génération (420), et réguler l'amplitude d'oscillation de l'équipement électrique domestique par une plaque oscillante pour fixer le galet.

6. Equipement électrique domestique selon la revendication 5, dans lequel le module de génération (420) est en outre configuré pour :
commander la pompe de pression de manière à augmenter la pression générée jusqu'à une première valeur numérique préétablie si l'instruction de régulation indique que l'amplitude d'oscillation doit être augmentée jusqu'à une première amplitude d'oscillation ; et
commander la pompe de pression de manière à réduire la pression générée jusqu'à une seconde valeur numérique préétablie si l'instruction de régulation indique que l'amplitude d'oscillation doit être réduite jusqu'à une seconde amplitude d'oscillation.

7. Equipement électrique domestique selon la revendication 5 ou la revendication 6, dans lequel le module de régulation (430) est en outre configuré pour :
commander deux plaques coniques de l'engrenage à gorge en forme de V pour se resserrer vers un centre pour augmenter le rayon périphérique de la courroie de transmission entourant la gorge en forme de V lorsque la pression générée augmente ; et
commander les deux plaques coniques pour s'écarter vers deux côtés pour réduire le rayon périphérique de la courroie de transmission entourant la gorge en forme de V lorsque la pression générée diminue.

8. Equipement électrique domestique selon l'une quelconque des revendications 5 à 7, dans lequel le module de réception (410) est en outre configuré pour :
recevoir une instruction infrarouge configurée pour réguler l'amplitude d'oscillation de l'équipement électrique domestique envoyée à partir d'un équipement de télécommande.

9. Procédé de commande d'amplitude d'oscillation, adopté pour un équipement électrique domestique comportant un composant de commande d'amplitude d'oscillation selon la revendication 1, **caractérisé en ce que** le procédé comporte les étapes consistant à :
recevoir une instruction de régulation consistant à réguler une amplitude d'oscillation de l'équipement électrique domestique lorsqu'un commutateur oscillant de l'équipement électrique domestique est dans un état pressé (201) ;
réguler une pression générée par la pompe de pression en fonction de l'instruction de régulation (202) ; et
réguler un rayon périphérique de la courroie de transmission entourant la gorge en forme de V en fonction de la pression générée, et l'amplitude d'oscillation de l'équipement électrique domestique est régulée par une plaque oscillante pour fixer le galet (203).

10. Procédé selon la revendication 9, dans lequel l'étape de régulation de la pression générée par la pompe de pression en fonction de l'instruction de régulation comporte les étapes consistant à :
commander la pompe de pression de manière à augmenter la pression générée jusqu'à une première valeur numérique préétablie si l'instruction de régulation indique que l'amplitude d'oscillation doit être augmentée jusqu'à une première amplitude d'oscillation ; et
commander la pompe de pression de manière à réduire la pression générée jusqu'à une seconde valeur numérique préétablie si l'instruction de régulation indique que l'amplitude d'oscillation doit être réduite jusqu'à une seconde amplitude d'oscillation.

11. Procédé selon la revendication 9 ou la revendication 10, dans lequel l'étape de régulation du rayon périphérique de la courroie de transmission entourant la gorge en forme de V en fonction de la pression générée comporte les étapes consistant à :
commander deux plaques coniques de l'engrenage à gorge en forme de V pour se resserrer vers un centre pour augmenter le rayon périphérique de la courroie de transmission entourant la gorge en forme de V lorsque la pression générée augmente ; et
commander les deux plaques coniques pour s'écarter vers deux côtés pour réduire le rayon périphérique de la courroie de transmission entourant la gorge en forme de V lorsque la pression générée diminue.

12. Procédé selon la revendication 9, dans lequel l'étape de réception de l'instruction de régulation consistant à réguler l'amplitude d'oscillation de l'équipement électrique domestique comporte l'étape consistant à :
recevoir une instruction infrarouge configurée pour réguler l'amplitude d'oscillation de l'équipement électrique domestique envoyée à partir d'un équipement de télécommande.

13. Dispositif de commande d'amplitude d'oscillation, configuré pour un équipement électrique domestique comportant un composant de commande d'amplitude d'oscillation, le composant de commande d'amplitude d'oscillation comportant un engrenage à gorge en forme de V, une pompe de pression, un galet avec une gorge préformée et une courroie de transmission, la courroie de transmission étant configurée pour entourer une gorge en forme de V de l'engrenage à gorge en forme de V et la gorge préformée du galet, le composant de commande d'amplitude d'oscillation étant spécialement fourni selon l'une quelconque des revendications 1 à 3, **caractérisé en ce que** le dispositif comporte :
un processeur ; et
une mémoire configurée pour stocker des instructions exécutables pour le processeur, dans lequel le processeur est configuré pour exécuter un procédé selon la revendication 9.

14. Programme informatique incluant des instructions pour exécuter les étapes d'un procédé de commande d'amplitude d'oscillation selon l'une quelconque des revendications 9 à 12 lorsque ledit programme est exécuté par un ordinateur.

15. Support d'enregistrement lisible par un ordinateur et ayant enregistré sur celui-ci un programme informatique incluant des instructions pour exécuter les étapes d'un procédé de commande d'amplitude d'oscillation selon l'une quelconque des revendications 9 à 12.
